# EUROPEAN PATENT APPLICATION

(11) **EP 4 354 658 A1**
(43) Date of publication of application: **17.04.2024**
(21) Application number: 22820591.0
(22) Date of filing: 10.06.2022
(51) Int. Cl.: H01Q 9/04, H01Q 21/06

(54) **ANTENNA MODULE**

(30) Priority: 11.06.2021 KR 20210075854
(71) Applicant: LG Innotek Co., Ltd., Seoul 07796 (KR)
(72) Inventor: OH, Sae Won, Seoul 07796 (KR); KIM, Kyeng Suk, Seoul 07796 (KR); PARK, Woo Cheon, Seoul 07796 (KR)
(74) Representative: DREISS Patentanwälte PartG mbB
(86) International application number: PCT/KR2022/008183
(87) International publication number: WO 2022/260464

(57) **Abstract**

An antenna module according to an embodiment of the present invention comprises: a housing including an accommodation space therein, and having a first antenna arranged on at least one surface that surrounds the accommodation space; and a substrate which is arranged in the accommodation space, and which has a second antenna arranged on the upper surface thereof so as to overlap with at least a part of the first antenna, wherein the first antenna and the second antenna are spaced a predetermined distance apart.

## Description

### [Technical Field]

The present invention relates to an antenna module using a coupling feeder method.

### [Background Art]

Recently, efforts for improving 5^{th} generation (5G)/radar communication systems or pre-5G communication systems have been conducted to satisfy the demand for wireless data traffic.

In order to obtain high data transmission rates, 5G communication systems use ultra-high frequency (mmWave) bands (sub 6 GHz, 28 GHz, 38 GHz, or higher frequencies). Such a high frequency band is called a band for mmWave due to its length of a wavelength.

In order to reduce a path loss of a radio wave in the mmWave band and increase a propagation distance of the radio wave, integration technologies such as beamforming, massive multiple-input multiple-output (MIMO), array antennas, and the like are being developed for 5G communication systems.

Meanwhile, due to high frequency characteristics of the mmWave, an antenna with an array structure with high directivity needs to be designed. Accordingly, a beam pattern of the antenna is formed in a sharp shape, but needs to cover a large area in some applications. However, since many components, such as a feeder circuit and a transceiver circuit, should be designed with the antenna on one substrate, there is a problem that there are many spatial limits in increasing the number of antennas or changing the design of the antenna.

In addition, due to the high frequency characteristics of the mmWave, a wavelength is short, and thus a performance variation severely occurs depending on dielectric constant and substrate deviations. In order to solve these problems, a Teflon substrate with a low dielectric constant is used for improving the performance of an antenna module. However, since the Teflon substrate is expensive compared to a fire retardant (FR)-4 substrate with a relatively high dielectric constant, there is a problem of increasing manufacturing costs.

Accordingly, an antenna module that can solve these problems is required.

### [Technical Problem]

The present invention is directed to providing an antenna module of which a manufacturing cost is reduced.

The present invention is directed to providing an antenna module of which a degree of design freedom is improved.

Objectives to be solved through embodiments are not limited thereto and include objectives or effects understood through the technical solutions or embodiments which will be described below.

### [Technical Solution]

One aspect of the present invention provides an antenna module including a housing including an accommodation space therein, in which a first antenna is disposed on at least one surface of the housing surrounding the accommodation space, and a substrate disposed in the accommodation space, in which a second antenna is disposed on an upper surface of the substrate to overlap at least a part of the first antenna, wherein the first antenna and the second antenna are spaced a predetermined distance from each other.

The housing may include a convex portion disposed in the accommodation space, and the convex portion may be formed on one surface of the housing facing the upper surface of the substrate.

The first antenna may be disposed on one surface of the convex portion facing the upper surface of the substrate.

The substrate may include a first zone overlapping the first antenna and a second zone on the upper surface, and the second antenna may be disposed in the second zone.

A dielectric constant of the substrate may be greater than four.

The housing may include an engraved groove in at least one surface thereof surrounding the accommodation space, and
the first antenna may be formed by performing plating on the engraved groove.

The first antenna may be a patch antenna array in which
a plurality of patches are connected, and the second antenna may be a patch antenna formed of a single patch.

A first patch which is one of the plurality of patches included in the first antenna may overlap a second patch included in the second antenna.

The first patch may be formed to be smaller than the second patch.

A separation distance between the first antenna and the second antenna may be set on the basis of an operating frequency of the first antenna.

A size of the plurality of patches included in the first antenna may be differently set according to a dielectric constant of the housing.

The antenna module may include a guide part disposed on the upper surface of the substrate to surround a side surface of the second antenna.

The guide part may be spaced a predetermined distance from an edge of the second antenna.

### [Advantageous Effects]

According to an embodiment of the present invention, manufacturing costs can be reduced.

A degree of design freedom of an antenna can be significantly improved.

A wide bandwidth can be used.

Various beneficial advantages and effects of the present invention are not limited to the above-described contents and may be more easily understood while describing specific embodiments of the present invention.

### [Description of Drawings]

FIG. 1 is an exploded perspective view illustrating an antenna module according to an embodiment of the present invention.
FIG. 2 is a cross-sectional view illustrating a first housing according to the embodiment of the present invention.
FIG. 3 is a bottom view illustrating the first housing according to the embodiment of the present invention.
FIG. 4 is a top view illustrating a substrate according to the embodiment of the present invention.
FIG. 5 is a cross-sectional view illustrating the antenna module according to the embodiment of the present invention.
FIG. 6 is a view for describing a first antenna, a second antenna, and a guide part according to the embodiment of the present invention.
FIG. 7 is a graph showing a result of simulation of the antenna module according to the embodiment of the present invention.

### [Modes of the Invention]

Hereinafter, exemplary embodiments of the present invention will be described in detail with reference to the accompanying drawings.

However, the technical spirit of the present invention is not limited to some embodiments which will be described and may be implemented in a variety of different forms, and one or more components of the embodiments may be selectively combined, substituted, and used within the range of the technical spirit of the present invention.

In addition, unless clearly and specifically defined otherwise by the context, all terms (including technical and scientific terms) used herein can be interpreted as having meanings customarily understood by those skilled in the art, and the meanings of generally used terms, such as those defined in commonly used dictionaries, will be interpreted in consideration of contextual meanings of the related art.

In addition, the terms used in the embodiments of the present invention are considered in a descriptive sense only and not to limit the present invention.

In the present specification, unless specifically indicated otherwise by the context, singular forms include plural forms, and in a case in which "at least one (or one or more) among A, B, and C" is described, this may include at least one combination among all possible combinations of A, B, and C.

In addition, in descriptions of components of the present invention, terms such as "first," "second," "A," "B," "(a)," and "(b)" may be used.

The terms are only to distinguish one component from another component, and the essence, order, and the like of the components are not limited by the terms.

In addition, it should be understood that, when a first component is referred to as being "connected" or "coupled" to a second component, such a description may include both a case in which the first component is directly connected or coupled to the second component, and a case in which the first component is connected or coupled to the second component with a third component disposed therebetween.

In addition, when a first component is described as being formed or disposed "on" or "under" a second component, such a description includes both a case in which the two components are formed or disposed in direct contact with each other and a case in which one or more other components are interposed between the two components. In addition, when the first component is described as being formed "on or under" the second component, such a description may include a case in which the first component is formed at an upper side or a lower side with respect to the second component.

An antenna module according to an embodiment of the present invention may be a device mounted on an electronic apparatus to receive a signal transmitted from the outside or transmit a signal to the outside. Electronic apparatuses may include vehicles, smartphones, tablets, home appliances, or the like. The antenna module according to the embodiment of the present invention may have a structure for reducing manufacturing costs, expanding usable bandwidths, and improving a degree of design freedom, which will be described below.

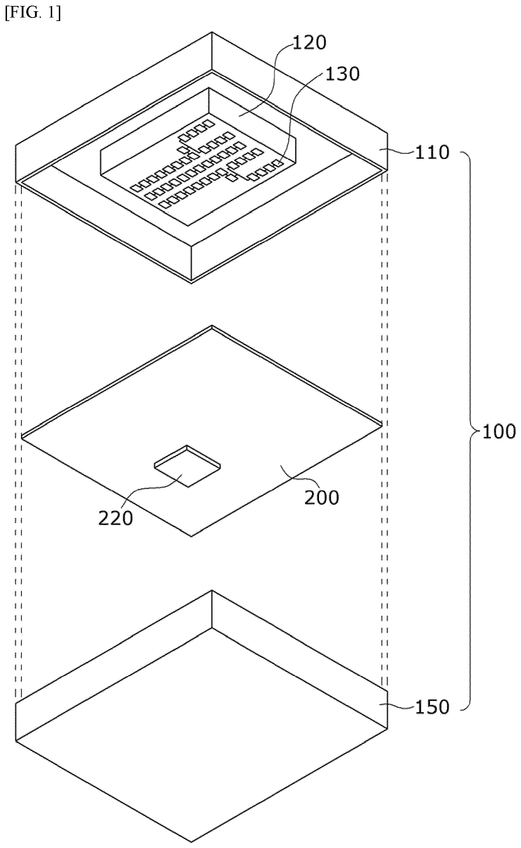

Hereinafter, a structure of an antenna module according to embodiments of the present invention will be described in detail with reference to FIGS. 1 to 6.

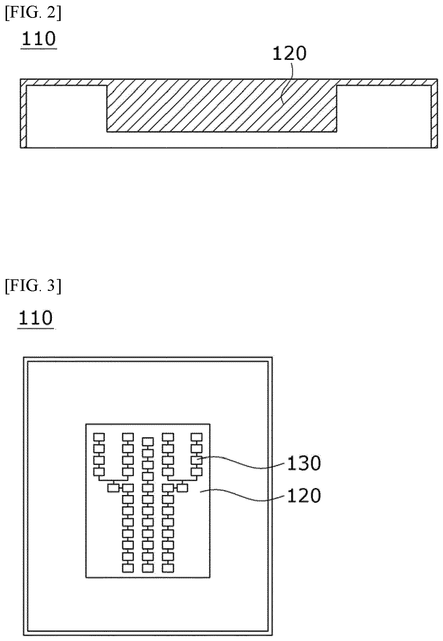

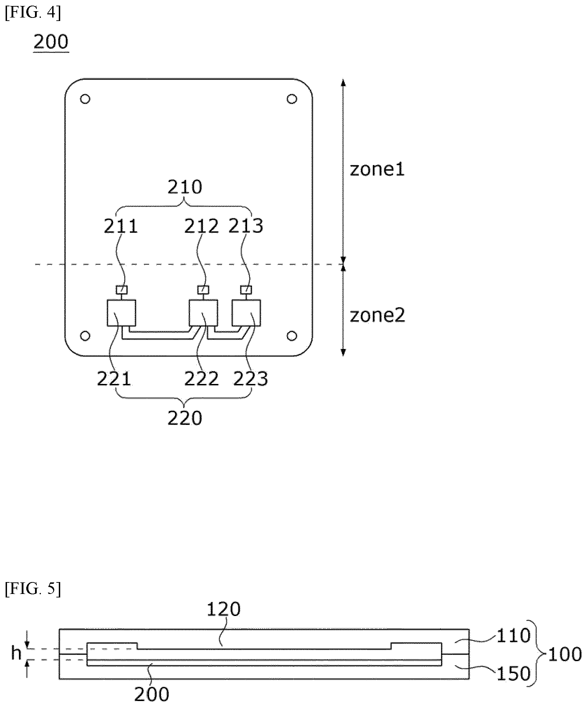

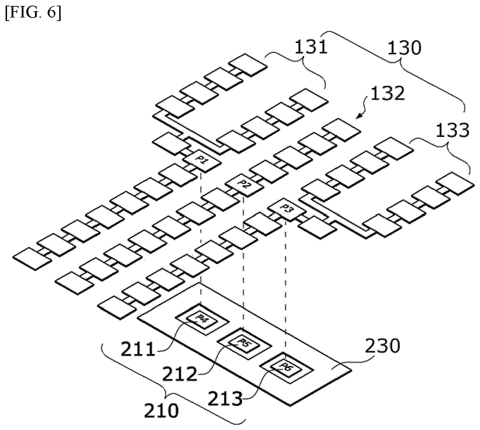

FIG. 1 is an exploded perspective view illustrating an antenna module according to an embodiment of the present invention. FIG. 2 is a cross-sectional view illustrating a first housing according to the embodiment of the present invention. FIG. 3 is a bottom view illustrating the first housing according to the embodiment of the present invention. FIG. 4 is a top view illustrating a substrate according to the embodiment of the present invention. FIG. 5 is a cross-sectional view illustrating the antenna module according to the embodiment of the present invention. FIG. 6 is a view for describing a first antenna, a second antenna, and a guide part according to the embodiment of the present invention.

The antenna module according to the embodiment of the present invention may include a housing 100 and a substrate 200.

The housing 100 may be formed of a material capable of transmitting an electromagnetic wave generated by an antenna. The housing 100 may be formed of an electrical insulator. For example, the housing 100 may be formed with a sandwich structure using a nylon-based plastic material. The housing 100 may be a radome.

The housing 100 may include an accommodation space therein. The housing 100 may accommodate the substrate 200 in the accommodation space.

The housing may include a first housing 110 and a second housing 150.

The first housing 110 may be an upper housing. The first housing 110 may be formed in a shape of which a lower surface is open. According to one embodiment, the first housing 110 may include four sidewalls and one upper plate. The first housing 110 may have a structure in which an edge of the upper plate is connected to edges of the four sidewalls. Accordingly, the first housing 110 may form a first accommodation space surrounded by the upper plate and the four sidewalls.

The second housing 150 may be a lower housing. The second housing 150 may be formed in a shape of which an upper surface is open. According to one embodiment, the second housing 150 may include four sidewalls and one lower plate. The second housing 150 may have a structure in which an edge of the lower plate is connected to edges of the four sidewalls. Accordingly, the second housing 150 may form a second accommodation space surrounded by the lower plate and the four sidewalls.

The first housing 110 and the second housing 150 may be coupled. According to one embodiment, the four sidewalls of the first housing 110 may be correspondingly coupled to the four sidewalls of the second housing 150. Since the first housing 110 and the second housing 150 are coupled, the housing 100 may form a closed accommodation space. That is, the housing 100 may form one accommodation space in which the first accommodation space of the first housing 110 and the second accommodation space of the second housing 150 are connected. When the first housing 110 and the second housing 150 are coupled, sealing may be performed to prevent foreign matter from entering the accommodation space. For example, coupling portions between the four sidewalls of the first housing 110 and the four sidewalls of the second housing 150 may be coated with an adhesive or sealant. Although not illustrated in the drawings, the first housing 110 and the second housing 150 may be fastened by a fastening member.

The housing 100 may include a convex portion 120. The convex portion 120 may be disposed in the accommodation space of the housing 100. The convex portion 120 may be disposed in the first accommodation space of the first housing 110. The convex portion 120 may be formed in the first housing 110. The convex portion 120 may be formed on one surface of the first housing 110. The convex portion 120 may be formed on the upper plate of the first housing 110. The convex portion 120 may be formed on a lower surface of the upper plate of the first housing 110. In this case, the lower surface of the upper plate of the first housing 110 may be a surface disposed to face the accommodation space of the housing 100, that is, a surface disposed to face the substrate 200 and disposed to face the second housing 150, among both surfaces of the upper plate of the first housing. The convex portion 120 may be formed on the lower surface of the upper plate of the first housing 110 to protrude toward the accommodation space of the housing 100. The convex portion 120 may be formed in a hexahedral shape but is not limited thereto. The convex portion 120 may be integrally formed with the upper plate of the first housing 110 but is not limited thereto. The convex portion 120 may be formed independently of the upper plate and then coupled to the upper plate.

The housing 100 may include a first antenna 130. The first antenna 130 may be disposed on at least one surface of the housing 100 surrounding the accommodation space. The first antenna 130 may be disposed on the upper plate of the first housing 110. According to one embodiment, the first antenna 130 may be disposed on the lower surface of the upper plate of the first housing 110. The lower surface of the upper plate of the first housing 110 may be one surface facing an upper surface of the lower plate of the second housing 150. The lower surface of the upper plate of the first housing 110 may be one surface facing an upper surface of the substrate 200. According to one embodiment, the first antenna 130 may be disposed on one surface of the convex portion 120 formed in the first housing 110. The first antenna 130 may be formed on a lower surface of the convex portion 120. The lower surface of the convex portion 120 may be one surface facing the upper surface of the lower plate of the second housing 150. The lower surface of the convex portion 120 may be one surface facing the upper surface of the substrate 200. In this case, the lower surface of the convex portion 120 may be a surface disposed to face the accommodation space of the housing 100, that is, a surface disposed to face the substrate 200 and disposed to face the second housing 150.

The housing 100 may include an engraved groove in at least one surface surrounding the accommodation space. According to one embodiment, the engraved groove may be formed in the lower surface of the upper plate of the first housing 110. For example, the groove may be formed through a laser etching process or the like. In addition, the first antenna 130 may be formed in the engraved groove of the lower surface of the upper plate. The first antenna 130 may be formed by plating the engraved groove with a conductor. According to one embodiment, the engraved groove may be formed in the convex portion 120 of the first housing 110. The engraved groove may be formed in the lower surface of the convex portion 120 of the first housing 110. For example, the groove may be formed through the laser etching process or the like. In addition, the first antenna 130 may be formed in the engraved groove of the lower surface of the convex portion 120. The first antenna 130 may be formed by plating the engraved groove with the conductor.

The first antenna 130 may include a plurality of patch antennas. The patch antenna is a general form of antenna printed on a dielectric and may be called a microstrip patch antenna. The plurality of patch antennas may be connected to each other. The first antenna 130 may be a patch antenna array in which the plurality of patch antennas are connected. The first antenna 130 may include a plurality of patch antenna arrays. Among the plurality of patch antenna arrays, at least one patch antenna array may be a transmitting (TX) antenna used for transmitting a wireless signal, and at least one patch antenna array may be a receiving (RX) antenna used for receiving a wireless signal.

The size of the plurality of patch antennas included in the first antenna 130 may be differently set according to a dielectric constant of the housing 100. According to one embodiment, the size of the plurality of patch antennas included in the first antenna 130 may be differently set according to a dielectric constant of the first housing 110. According to one embodiment, the size of the plurality of patches included in the first antenna 130 may be differently set according to a dielectric constant of the convex portion 120 disposed in the first housing 110. For example, as the dielectric constant of the convex portion 120 in which the first antenna 130 is disposed increases, the size of the patch included in the first antenna 130 may become smaller.

As described above, since the first antenna 130 is disposed on one surface of the housing 100, an antenna for transmitting or receiving a signal to or from the outside may not be disposed on the substrate 200 disposed in the accommodation space of the housing 100. Since a circuit part for driving the antenna should be disposed on the substrate 200 disposed in the accommodation space of the housing 100, when the antenna is disposed on the substrate 200, a space in which the antenna is disposed may be limited. However, according to the embodiment of the present invention, since the first antenna 130 is disposed on one surface of the housing 100, a design space for the antenna can be increased, and thus there is an advantage of significantly improving a degree of design freedom. In addition, since more antennas can be disposed when compared to the conventional case, a coverage area of the antenna module can be significantly improved.

The housing 100 may accommodate the substrate 200. The substrate 200 may be disposed in the accommodation space formed when the first housing 110 and the second housing 150 are coupled. For example, after the substrate 200 is fixed in the second housing 150, the first housing 110 is coupled to the second housing 150, and thus the housing 100 may accommodate the substrate 200 in the accommodation space.

The substrate 200 may be disposed in the accommodation space of the housing 100. The substrate 200 may be fixed in the second housing 150. For example, the substrate 200 may include coupling holes in corner regions, and the coupling holes may be coupled to the second housing 150 using coupling members such as screws.

The substrate 200 may have a dielectric constant greater than a predetermined value. According to one embodiment, the substrate 200 may have the dielectric constant greater than four. For example, when the substrate 200 has the dielectric constant greater than four, the substrate 200 may be a substrate 200 formed of a fire retardant (FR)-4 material. According to the embodiment of the present invention, even when the substrate 200 of the antenna module is formed of a material with a dielectric constant greater than four (for example, an FR-4 material with a dielectric constant ranging from 4.2 to 4.8), since the first antenna for transmitting and receiving a signal is disposed in the housing 100, the performance may be similar to that of an antenna module in which an antenna patch is disposed on a substrate 200 formed of a material with a low dielectric constant (dielectric constant of 2.0) such as polytetrafluoroethylene (PTFE). Accordingly, there is an advantage that manufacturing costs can be significantly reduced as compared to an antenna module using the substrate 200 with an expensive low dielectric constant.

The substrate 200 may include a second antenna 210. The second antenna 210 may include a patch. The second antenna 210 may be a patch antenna formed of a single patch. According to one embodiment, the second antenna 210 may be provided as a plurality of second antennas 210. For example, as illustrated in FIG. 6, when the first antenna 130 includes three patch antenna arrays 131, 132, and 133, the second antenna 210 may include three single patch antennas 211, 212, and 213 corresponding to the patch antenna arrays 131, 132, and 133, respectively.

The second antenna 210 may be disposed on the substrate 200. The second antenna 210 may be disposed on the upper surface of the substrate 200. The upper surface of the substrate 200 may be a surface facing the lower surface of the upper plate of the first housing 110. The substrate 200 may include a first zone zone1 overlapping the first antenna 130 and a second zone zone2 on the upper surface, and the second antenna 210 may be disposed in the second zone zone2 of the substrate 200. In this case, an area of the second zone zone2 of the substrate 200 may be smaller than an area of the first zone zone1 of the substrate 200.

The second antenna 210 may be disposed on the upper surface of the substrate 200 to overlap at least a part of the first antenna 130. The patch included in the second antenna 210 may overlap any one of the plurality of patches included in the first antenna 130. For example, referring to FIG. 6, the first antenna 130 may include a first patch antenna array 131, a second patch antenna array 132, and a third patch antenna array 133, each of which includes a plurality of patches, and the second antenna 210 may include a first single patch antenna 211, a second single patch antenna 212, and a third single patch antenna 213, each of which includes one patch. The first patch antenna array 131 may overlap the first single patch antenna 211 in a vertical direction of the antenna module. Among the plurality of patches included in the first patch antenna array 131, a first patch P1 may overlap a fourth patch P4 included in the first single patch antenna 211. Through the first patch P1 and fourth patch P4 overlapping each other, power feeding may be performed between the first single patch antenna 211 of the second antenna 210 and the first patch antenna array 131 of the first antenna 130 through coupling. Since the power feeding is performed through the coupling, there are advantages that the antenna module can be easily designed, and manufacturing costs can be reduced as compared to the case of a direct feeder method.

Meanwhile, the first patch P1 may be greater than the fourth patch P4. An area of the first patch P1 may be greater than an area of the fourth patch P4. That is, an entire region of the fourth patch P4 may overlap the inside of the first patch P1. Accordingly, when the second antenna 210 performs power feeding on the first antenna 130 through coupling, an efficiency of feeder can be optimized, and noise interference between adjacent antennas can be minimized. Since the second patch antenna array 132 and the second single patch antenna 212, and the third patch antenna array 133 and the third single patch antenna 213 are the same as the first patch antenna array 131 and the first single patch antenna 211 which are described above, detailed descriptions thereof will be omitted.

The first antenna 130 and the second antenna 210 may be spaced a predetermined distance h from each other. Since the first antenna 130 and the second antenna 210 are spaced the predetermined distance h from each other, an air gap may be formed between the first antenna 130 and the second antenna. As described above, the second antenna 210 may be coupled to the first antenna 130 and indirectly perform power feeding on the first antenna 130 through the air gap.

The separation distance h between the first antenna 130 and the second antenna 210 may be set on the basis of an operating frequency of the first antenna 130. The separation distance h between the first antenna 130 and the second antenna 210 may be set on the basis of an operating frequency band of the first antenna 130.

The substrate 200 may include a communication circuit part 220. The communication circuit part 220 is a circuit for supplying power to the second antenna 210 or performing impedance matching. The communication circuit part 220 may be electrically connected to the second antenna 210 and may supply power to the second antenna 210. The communication circuit part 220 may include at least one of an impedance matching circuit, a power supply circuit, and a radio frequency integrated circuit (RFIC). The communication circuit part 220 may be disposed on at least one surface of the upper surface of the substrate 200 and a lower surface of the substrate 200. For example, the impedance matching circuit may be disposed on the upper surface of the substrate 200, and the RFIC may be disposed on the lower surface of the substrate. The communication circuit part 220 disposed on the upper surface of the substrate 200 and the communication circuit part 220 disposed on the lower surface of the substrate may be electrically connected through a hole passing through the substrate 200. The communication circuit part 220 may be disposed in the second zone zone2 of the substrate 200. Accordingly, a circuit element and the like may not be disposed in the first zone zone1 of the substrate 200.

The substrate 200 may include a guide part 230. The guide part 230 may be disposed on the upper surface of the substrate 200. The guide part 230 may be formed in a plate shape. The guide part 230 may be formed in the form in which a hole is formed in a plate. The hole formed in the guide part 230 may be formed in the same shape as that of the second antenna 210. For example, when the second antenna 210 has a quadrangular patch shape, the hole formed in the guide part 230 may also be formed in a quadrangular shape. The second antenna 210 may be disposed in the hole formed in the guide part 230. That is, the guide part 230 may be disposed on the upper surface of the substrate 200 to surround a side surface of the second antenna 210. A size of the hole formed in the guide part 230 may be greater than a size of the second antenna 210. Accordingly, a predetermined distance may be formed between an edge of the hole formed in the guide part 230 and an edge of the second antenna 210. The guide part 230 can improve coupling performance between the first antenna 130 and the second antenna 210. For example, referring to FIG. 6, the guide part 230 may perform control so that an electromagnetic signal generated by the fourth patch P4 included in the first single patch antenna 211 is not distributed to the surroundings and is directed to the first patch P1 among the plurality of patches included in the first patch antenna array 131, thereby improving coupling performance and increasing an efficiency of a feeder. In addition, noise can be reduced by blocking electromagnetic signals being transmitted to nearby antennas such as the second patch antenna array 132 and second single patch antenna 212 and the surrounding third patch antenna array 233 and third single patch antenna 213. In the present embodiment, although the guide part 230 is described as a hole, the guide part 230 may be formed as a protruding part.

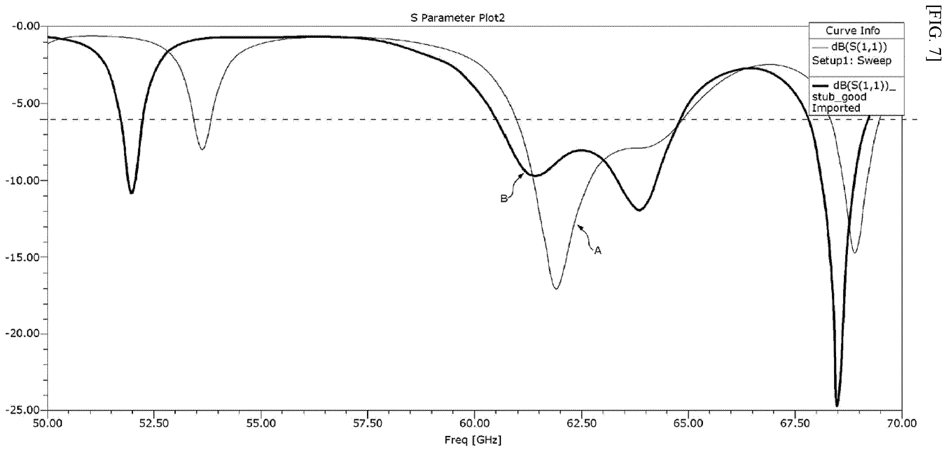

FIG. 7 is a graph showing a result of simulation of the antenna module according to the embodiment of the present invention.

FIG. 7 shows a return loss in a conventional case in which an antenna is disposed on a substrate and a return loss in a case in which the antenna is disposed in the housing according to the embodiment of the present invention.

Referring to FIG. 7, an antenna module A in which an antenna is disposed on a substrate as in the conventional case shows a return loss of -6 [dB] in the range of 61 to 65 [GHz]. In addition, an antenna module B according to the embodiment of the present invention shows a return loss of -6 [dB] in the range of 60.5 to 65 [GHz]. As described above, it can be seen that the antenna module according to the embodiment of the present invention has a return loss similar to that of the conventional antenna module in a wide frequency band.

While the present invention has been mainly described above with reference to embodiments, it will be understood by those skilled in the art that the present invention is not limited to the embodiments, the embodiments are only exemplary, and various modifications and applications, which are not exemplified above, may be made within the range of the present invention without departing from the essential features of the present embodiments. For example, components specifically described in the embodiments may be implemented with modifications. In addition, it should be interpreted that differences related to such modifications and applications fall within the scope of the present invention defined by the appended claims.

### [Reference Numerals]

100: HOUSING
110: FIRST HOUSING
120: CONVEX PORTION
130: FIRST ANTENNA
150: SECOND HOUSING
200: SUBSTRATE
210: SECOND ANTENNA

## Claims

1. An antenna module comprising:
a housing including an accommodation space therein, wherein a first antenna is disposed on at least one surface of the housing surrounding the accommodation space; and
a substrate disposed in the accommodation space, wherein a second antenna is disposed on an upper surface of the substrate to overlap at least a part of the first antenna,
wherein the first antenna and the second antenna are spaced a predetermined distance from each other.

2. The antenna module of claim 1, wherein:
the housing includes a convex portion disposed in the accommodation space; and
the convex portion is formed on one surface of the housing facing the upper surface of the substrate.

3. The antenna module of claim 2, wherein the first antenna is disposed on one surface of the convex portion facing the upper surface of the substrate.

4. The antenna module of claim 1, wherein a dielectric constant of the substrate is greater than four.

5. The antenna module of claim 1, wherein:
the housing includes an engraved groove in at least one surface thereof surrounding the accommodation space; and
the first antenna is formed by performing plating on the engraved groove.

6. The antenna module of claim 1, wherein:
the first antenna is a patch antenna array in which a plurality of patches are connected; and
the second antenna is a patch antenna formed of a single patch.

7. The antenna module of claim 6, wherein a first patch which is one of the plurality of patches included in the first antenna overlaps a second patch included in the second antenna.

8. The antenna module of claim 7, wherein the first patch is formed to be smaller than the second patch.

9. The antenna module of claim 1, comprising a guide part disposed on the upper surface of the substrate to surround a side surface of the second antenna.

10. The antenna module of claim 9, wherein the guide part is spaced a predetermined distance from an edge of the second antenna.
